# EUROPEAN PATENT SPECIFICATION

(11) **EP 2 899 816 B1**
(45) Date of publication and mention of the grant of the patent: **15.05.2019**
(21) Application number: 14466004.0
(22) Date of filing: 27.01.2014
(51) Int. Cl.: H01S 3/13, H01S 3/00, G01J 11/00, H01S 3/23

(54) **Method and device for time synchronization of picosecond and subpicosecond laser pulses**
Verfahren und Vorrichtung zur Zeitsynchronisierung von Pikosekunden- und Subpikosekunden-Laserpulsen
Procédé et dispositif pour la synchronisation temporelle d'impulsions laser en picoseconde et sous-picoseconde

(43) Date of publication of application: 29.07.2015
(73) Proprietor: Fyzikální ústav AV CR, v.v.i., 18221 Praha 8 (CZ)
(72) Inventor: Batysta, Frantisek, 17000 Prague 7 (CZ); Antipenkov, Roman, 18200 Prague 8 (CZ); Naylon, Jack Alexander, Newcastle-under-Lyme, Staffordshire ST5 5AN (GB); Green, Jonathan Tyler, 13000 Prague 3 (CZ); Bakule, Pavel, 12000 Prague 2 (CZ); Novák, Jakub, 12000 Prague 2 (CZ)

(56) References cited:
- US-A1- 2003 038 936
- SCHIBLI T R ET AL: "300 attosecond active synchronization of passively mode locked lasers using balanced cross-correlation", CONFERENCE ON LASERS AND ELECTRO-OPTICS. (CLEO 2003). TECHNICAL DIGEST. POSTCONFERENCE EDITION. BALTIMORE, MD, JUNE 1 - 6, 2003; [TRENDS IN OPTICS AND PHOTONICS. (TOPS)], WASHINGTON, WA : OSA, US, 6 June 2003 (2003-06-06), pages 921-922, XP031951756, ISBN: 978-1-55752-748-6
- SHREENATH A P ET AL: "Measuring ultraweak, broadband, spatially incoherent ultrashort pulses using optical-parametric-amplification cross-correlation FROG", CONFERENCE ON LASERS AND ELECTRO-OPTICS. (CLEO 2003). TECHNICAL DIGEST. POSTCONFERENCE EDITION. BALTIMORE, MD, JUNE 1 - 6, 2003; [TRENDS IN OPTICS AND PHOTONICS. (TOPS)], WASHINGTON, WA : OSA, US, 6 June 2003 (2003-06-06), page 4pp, XP031952251, ISBN: 978-1-55752-748-6
- JAKUB NOVAK ET AL: "Thin disk picosecond pump laser for jitter stabilized kHz OPCP", HIGH-POWER, HIGH-ENERGY, AND HIGHINTENSITY LASER TECHNOLOGY; AND RESEARCH USING EXTREME LIGHT: ENTERING NEW FRONTIERS WITH PETAWATT-CLASS LASERS, vol. 8780, 15 April 2013 (2013-04-15), pages 878020-1-878020-8, XP55155169, DOI: 10.1117/12.2021553

## Description

### Field of the Invention

The invention relates to a method and device for picosecond and sub-picosecond laser pulse timing synchronization by means of a feedback loop based on the measurement of the relative delay in the pulses of pump and signal laser beams, using their interaction in a nonlinear media.

### Description of the Prior Art

For the purpose of description of the invention, the following text will use these terms:
- Pulse = a laser pulse is a short, time-limited pulse of optical laser radiation; the duration of a picosecond or sub-picosecond laser pulse is in the range of 1x 10⁻¹⁵ to 1x 10⁻⁹ seconds.
- Beam = a laser beam consists of repeating laser pulses with a defined frequency of repetition generated by a laser source (optical generator). A laser beam is linearly polarized.
   ∘ The signal laser beam is the object of amplification in the related optical systems and its amplification is the desired goal.
   ∘ The pump laser beam is an energetic beam; its energy is used to amplify the signal beam.
- The optical generator is generally a generator of laser radiation of various wavelengths, various frequencies of repetition and various intensities of single laser pulses. An optical resonator is, among other things, part of the optical generator.
- The nonlinear medium is a physical environment (e.g. solid compound, liquid, gas, plasma or mixtures thereof), the electrical polarization thereof nonlinearly depends on the intensity of optical radiation entering the environment.
- The nonlinear optical phenomenon is a physical phenomenon which occurs when optical radiation is propagated in a nonlinear medium. The order of the corresponding susceptibility tensor is considered to be the order of the nonlinear optical phenomenon.
- Optical Parametric Amplification (OPA) -a nonlinear optical phenomenon accompanied by energy transfer from the pump laser beam to the signal laser beam with the simultaneous formation of an idler beam. There are two types of OPA interaction, depending on whether the polarizations of the entering signal and idler beams are mutually orthogonal or not. In the first type, the polarization of the idler beam is the same as the polarization of the signal beam and both are orthogonal to the pump beam. In the second type, the polarization of the idler beam is always orthogonal to the polarization of the signal beam.

One of the branches of laser engineering development has recently focused on increasing the power of laser systems. There are several approaches ranging from finding brand new methods, materials and technologies, to optimizing the methods currently used in the prior art. This has lead to an effort to enlarge the active medium, use its yield more effectively, and insert amplifier chains, while shortening single pulses in laser beams and increasing repetition frequencies.

Solid-state lasers using gradual amplification in active or nonlinear media are a strongly represented group of high-performance laser systems. A system using energy transfer from a stronger pump laser beam to a signal beam by means of the Optical Parametric Amplification seems to be a promising arrangement. The OPCPA (Optical Parametric Chirped Pulse Amplification) amplifier works on this basis with spectrally chirped signal pulses. This type of amplifier requires a high quality overlap of the pump beams with the signal beams, or more precisely, the pump energetic pulse with the signal pulse intended for amplification; both in space and in time. In a nonlinear medium, energy transfer from the pump pulse to signal pulse occurs when the conditions of phase matching are satisfied. Perfect space and time (mainly time) synchronization of the pump and signal laser beams plays a key role in the utilization of this phenomenon.

With two independent optical generators, the options of electronic synchronization in the range of picoseconds and sub-picoseconds are generally insufficient. In the case of shorter than nanosecond pulses, mutual optical coupling must be used. Preferably it is possible to derive both signal and pump beam spectral components from a common broadband laser beam. Its spectral components produce signal laser pulse and, after amplification in laser amplifier, also the pump laser pulse. Inaccuracies in the relative timing of pump and signal pulses are caused by the vastly different lengths of the optical paths in various types of optical generators for the two types (and two different wavelengths) of beams; or by vibrations of optical elements, their thermal expansion, refractive index changes, etc. These phenomena cause additional timing jitter of the pulses that later enter the OPCPA amplifier; which is why their relative delay needs to be specifically modified.

Usually, the desired delay is achieved through a delay line controlled by electronic devices, which can set a very accurate delay on the order of femtoseconds. However, electronic measurement of this delay and the subsequent adjustment (usually implemented by means of a feedback loop) is very problematic. In the range of picosecond and sub-picosecond laser beams, besides the trouble with primary timing synchronization, the quality and number of reflective surfaces and environments, through which the laser beams pass, also has significant influence and additionally increases the instability of default synchronization.

Several alternative schemes of laser systems based on OPCPA have been described; e.g. two variants of synchronization were suggested in the US 2005/0271094 A1 patent. The first one requires the generator of both the pump and signal laser beam to be equipped with a laser oscillator in the mode synchronization regime in a resonator (Mode-locking), which excludes all other types of generators, e.g. a regenerative amplifier or multipass amplifier. Another disadvantage is the need to intervene in the pump or signal beam oscillator itself. The second approach is based on the generation of a super-continuum with the help of the signal laser in a nonlinear fibre and its subsequent injection into the regenerative amplifier of the pump laser. However, this method cannot compensate for the instability originating from the pump beam amplifier and other effects originating from instruments preceding the OPCPA amplifier.

The currently used system for the synchronization of picosecond laser pulses for OPCPA [e.g. Schwarz et al., Optics Express 20, 2075-2077 (2012)] is based on measurement of the relative delay between the pump and broadband signal pulses using a nonlinear optical phenomenon called SGF (Sum Frequency Generation) - the relative time delay between both pulses (pump and signal) causes a change in the wavelength of the measured frequency. This change is then detected and used for time stabilization in the feedback loop. An important disadvantage of this method is the need for high energy in both beams for the occurrence of nonlinear SFG phenomenon, which requires a preamplifier in the signal beam preceding the synchronization system itself. Another disadvantage is the use of a pump pulse before its conversion to the second-harmonic, which then enters OPCPA. Synchronization thus doesn't eliminate the effects of the second-harmonic generation process and the effects of instrumentation with unequal optical paths.

Another way of measurement of the relative delay between laser pulses is known from the field of fibre lasers [*e.g.* Kim J. et al., Nature Photonics 2, 733-736 (2008)]. It is based on a balanced cross-correlator of two signals with the same frequencies, which interact in a nonlinear crystal. The measured and compared signals in this arrangement are those of SHG (second harmonic generation) with type II interaction, *i.e.* beams with orthogonal polarizations are combined. Analogously to the previous case, both entering beams must have a relatively high intensity to obtain a properly detectable output. This system cannot be used for the synchronization of beams for OPCPA, because it works with delayed pulses of the same wavelengths.

The aim of the invention is to introduce a method and device for time synchronization of picosecond and sub-picosecond laser pulses for using of OPCPA, suppressing disadvantages of above-mentioned systems known from the prior art.

### Summary of the Invention

The method and device introduced here significantly diminishes the above-mentioned limitations of currently known solutions. The matter in question is time synchronization of picosecond and sub-picosecond laser pulses by means of a feedback loop, which is based on the measurement of the relative delay of the signal and pump laser pulses, using their interaction in a nonlinear medium.

The object of the present invention is fulfilled by a method and a device as defined in the independent claims 1, 8. Preferred embodiments are defined in the dependent claims.

The principle of the method is described in the following steps:
1) Portions of laser beams, from hereon referred to as "partial beams" are taken out of the signal and pump laser beams immediately before entering OPCPA or another interaction affected by the synchronization. The pulses of the partial beams have identical relative time delay to the pulses entering OPCPA or another interaction affected by the synchronization.
2) The polarization of both the partial beams is adjusted so that the intensities in the mutually orthogonal components of pulse polarization of both beams are comparable.
3) A constant and pre-defined delay is introduced between the orthogonal pulse polarization components of one of the partial laser beams.
4) The pulses prepared in the way described above, are guided to at least one adequately oriented anisotropic nonlinear medium exhibiting the OPA that are consecutively arranged in the combined beam path without an optical element between them, whereas amplification of the horizontal and vertical pulse polarization components of the partial signal beam occurs separately in each of the respective appropriately oriented anisotropic nonlinear media exhibiting the OPA. There, the intensity of the corresponding pulse polarization component of the partial signal beam is amplified at the expense of energy corresponding to the polarization component of the pulses of the partial pump beam. The appropriate polarization component of the entering beams is determined by the type of OPA interaction in the nonlinear medium.
5) The intensity of both pulse polarization components of the amplified partial signal and/or idler wave, resulting from the OPA and emerging from at least one appropriately oriented anisotropic nonlinear medium, where they were amplified due to the interaction of the corresponding pulse polarization components of the partial pump beam and partial signal beam, are measured and analysed with a suitable measuring and evaluating device.
6) The values obtained from step 5 are used for the feedback loop, which influences the basic synchronization and generation of the primary laser beams entering OPCPA.

The method presented here can be implemented with any combination of the successive stages of the method, which are described above and/or below.

Preferred arrangement of stage 1: The partial signal laser beam and partial pump laser beam are taken out through semi-transparent mirrors made of material with a low value of group dispersion for predetermined pulse wavelengths (so called Low-GDD), designed to avoid temporal stretching of laser pulses due to passing through the dispersive material, which is, however, not necessary for invention to work in principle.

Preferred arrangement of stage 2: The ratio between the polarization components of both partial pulses is adjusted when the partial laser beams pass through polarization-rotating devices, appropriately adjusted to match the desired orientation of the polarization plane of partial laser pulses.

Preferred arrangement of stage 3: The relative delay of the polarization components of the pulses of one of the partial beams is achieved by guiding each polarization component to another optical path. These paths vary in length and/or at least one of the separated polarization components of the partial beam passes through a signal-delaying device.

Another preferred arrangement of stage 3: The polarization components of the partial beam gain fixed and defined relative delay by passing through optically birefringent material.

Preferred arrangement of stage 4: Relatively delayed polarization components of pulses of one of the partial beams are merged in a common optical path going through a coupling unit. Both polarization components of the pulses of the other partial beam are lead to the same common optical path going through the same and/or another coupling device. The resulting combined beam is lead to at least two mutually orthogonally oriented anisotropic nonlinear media exhibiting the OPA . Those two media are consecutively arranged in the direction of the propagation of the partial beams. Amplification of the horizontal and vertical pulse polarization components of the partial signal beam occurs separately in each of the respective appropriately oriented anisotropic nonlinear media exhibiting the OPA .

Preferred arrangement of stage 5: The pulse of the amplified partial signal beam or pulse of the idler beam, resulting from the OPA interaction, is passed through an optical bandpass filter.

In the preferred arrangement of stage 5, before measurement, the pulse of the idler or of the amplified partial beam goes through an element separating the polarization components of the beam.

Another claim of the invention is the device for the optical stabilization of picosecond and sub-picosecond laser pulses. Its essential components include: i) At least one signal delaying unit, designed for delaying at least one polarization component of pulses of one of the partial laser beams; ii) at least one coupling unit designed for producing a combined beam; iii) at least two anisotropic nonlinear media exhibiting the OPA , designed to ensure an interaction between the orthogonal components of the pulses of the partial laser beams; iv) at least one measuring/evaluating unit containing at least one photodetector with time resolution and an evaluation device.

The presented device can be implemented with any combination of arrangements of the parts described above and/or below.

In the preferred embodiment , the device is connected with a primary laser system using semi-transparent mirrors with a low group dispersion value for the predetermined wavelengths of the pulses, positioned in the optical paths of the signal and pump laser beams.

In the preferred embodiment, the device also contains at least one polarization rotating element designed for rotating the plane of polarization of the partial signal laser beam and/or partial pump pulse laser beam. The polarization rotating element is a half-wave plate and/or Faraday rotator and/or a system of mirrors.

In any embodiment, the delaying unit is implemented as a delaying plate and/or a system of mirrors and/or optically birefringent material.

In the preferred embodiment, the device also contains at least one element splitting the pulse polarization components of at least one of the partial laser beams. This splitting element is a polarizing beam splitter and/or a polarizing cube and/or a thin-layer polarizing film and/or a Nicol prism and/or a Glan-Thompson prism and/or a Glan-Taylor prism and/or a dichroic polarizing beam splitter.

In the preferred embodiment, the device contains a Mach-Zender interferometer for producing relatively delayed pulse polarization components of one of the partial laser beams; consisting of a polarizing beam splitter, a delaying unit located in one arm of the interferometer and a unit coupling the relatively delayed pulse polarization components of this partial laser beam to a common optical path.

In the preferred embodiment, the device contains at least one optical coupling unit designed for leading at least some of the pulse polarization components of the partial pump laser beam and at the same time at least some of the pulse polarization components of the partial signal laser beam to a common optical path. This signal-coupling unit designed for producing a combined laser beam is a dichroic mirror and/or diffraction grating and/or a dichroic beam-splitter.

In the preferred embodiment, at least two anisotropic nonlinear media exhibiting the OPA in the device are located consecutively in the direction of combined beam propagation, and at the same time they are orthogonally oriented to each other.

In any embodiment, the anisotropic medium exhibiting the OPA for interaction of the respective pulse polarization components of the partial laser beams is a nonlinear crystal made of BBO (β-Baryum Borate), or LBO (Lithium Triborate), or KDP (Potassium Dihydrogen Phosphate), or DKDP (Potassium Dideuterium Phosphate), or BiBO (Bismuth Borate), or YCOB (Yttrium Calcium Oxoborate), or LiNBO3 (Lithium niobate), or KTP (Potassium Titanyl Phosphate).

In the preferred embodiment, the device contains at least one bandpass optical filter between the anisotropic nonlinear media exhibiting the OPA and the evaluating/measuring unit.

In another preferred embodiment, the evaluating/measuring unit in the device contains at least one element splitting the pulse polarization components of the measured beam. This splitting element is a polarizing beam splitter and/or a polarizing cube and/or a thin-layer polarizing film and/or a Nicol prism and/or a Glan-Thompson prism and/or a Glan-Taylor prism and/or a dichroic polarizing beam splitter.

In any embodiment, the photodetector in the device is a photodiode and/or photomultiplier and/or phototransistor.

The fact that the device presented here works according to the invention with the polarization components of both beams enables both partial signals to be run through one optical path, which eliminates the error caused by different instrumentation.

The method introduced here according to the invention is unique compared to the system described in US 2005/0271094 A1, because thanks to measuring immediately before the OPCPA amplifier, we can expect an approximately order of magnitude smaller instability arising from the regenerative amplifier of the pump beam. In contrast to the system described in the literature (Schwarz et al.), in addition to the above-mentioned advantage of measuring immediately before OPCPA, an order of magnitude lower energies are needed (on the order of pJ) in the beams entering the synchronizing unit.

### List of Drawings

The invention is further illustrated in the drawings, wherein:
- **Fig. 1** shows a diagram of the method stages for synchronization according to the invention.
- **Fig. 2** shows a general layout of the involvement of the laser system for OPCPA amplification with the synchronizing device according to the invention.
- **Fig. 3** shows the layout of the preferred arrangement of the synchronizing device according to the invention.
- **Fig. 4** shows another preferred arrangement of the synchronizing device according to the invention.
- **Fig. 5** shows the relative orthogonal rotation of two anisotropic nonlinear media exhibiting the OPA .
- **Fig. 6** introduces the relative position of the polarization components of the partial signal pulse and partial pump pulse, which enter the interaction in two mutually orthogonally oriented anisotropic nonlinear media exhibiting the OPA .

Figures illustrating the invention and examples of specific arrangements described thereafter by no means limit the scope of the protection specified in the definition; they just clarify the essence of the invention.

### Explanation of Drawings

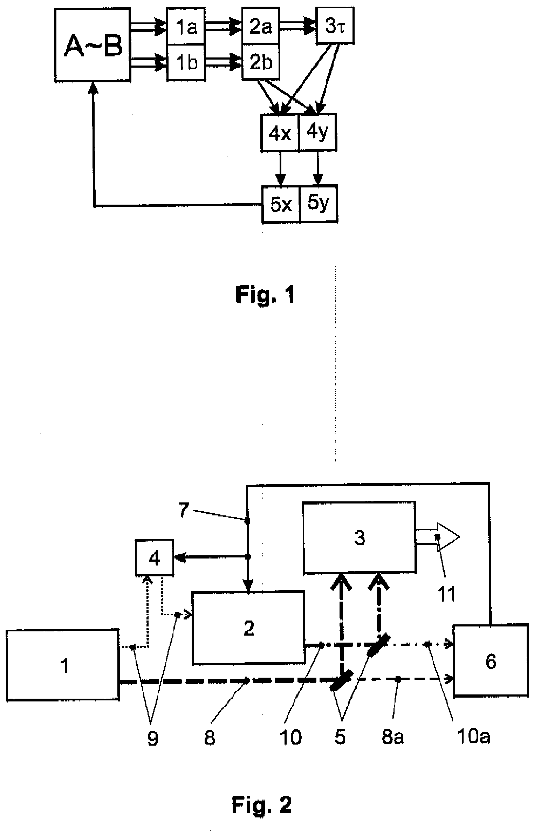

**Figure 1** shows a stage diagram of the method for time synchronization of picosecond and sub-picosecond laser pulses. The alphanumeric designation of the blocks here has absolutely no connection to the designation subsequently used in the diagrams of experimental arrangements; therefore, it cannot be concluded that a specific stage could only be used on a specific laser beam, just as it doesn't describe the polarization component relationship of individual partial laser beams. The method consists of the following stages:
- **The A∼B block** includes basic synchronization and generation of the signal and pump laser beam, which enter the OPCPA interaction or another interaction, which requires synchronization; the block emphasizes their relationship.
- **Stage 1a and 1b** represent the decoupling of the partial signal laser beam and partial pump laser beam from their respective laser beams immediately before entering OPCPA or another interaction, which is subjected to synchronization. The pulses in both partial beams have the same relative delay as the primary pulses. The measurement of this relative delay is the aim of the invention.
- **Stage 2a and 2b** represent the adjustment of the polarization plane of both partial laser beams so that the intensity of the horizontal and vertical polarization components of both partial beams are comparable.
- **Stage 3τ** represents the introduction of the relative delay between the horizontal and vertical polarization component in one of the partial laser beams (fixed and defined time delay τ).
- **Transition between stages 3τ and 2b to 4x and 4y** emphasizes bringing mutually appropriate (according to the selected OPA interaction type) pulse polarization components of the partial beams to the anisotropic nonlinear medium exhibiting the OPA ; i.e. that the following components enter the medium together (in space and almost synchronously in time):
   The horizontal or vertical polarization component of the partial pump beam and vertical or horizontal polarization component of the partial signal beam for OPA interaction type I; alternatively the horizontal or vertical polarization component of the partial pump beam and the horizontal or vertical polarization component of the partial signal beam for OPA interaction type II.
- **Stage 4x and 4y** represents nonlinear interaction, in which energy is transferred from the relevant polarization component of the partial pump pulse to the corresponding polarization component of the signal pulse. The passage of partial laser beams through the anisotropic nonlinear medium exhibiting OPA causes an amplification of individual pulse polarization components of the partial signal beam and the emergence of the idler beam.
- **Stage 5x and 5y** represents the process of measurement and evaluation, which measures and compares the intensity of radiation in the individual pulse polarization components of the amplified partial beam and/or idler beam. Based on the measured values, the feedback loop is implemented to adjust synchronization and generation of the laser beam shown in the **A∼B block.**

**Fig. 2** introduces the general layout of the laser system using an OPCPA-type optical amplifier to amplify the laser signal. The depicted laser system contains an optical pulse oscillator 1, regenerative amplifier 2, optical amplifier OPCPA 3, basic optical synchronization unit 4, semi-transparent mirrors 5, jitter stabilization system synchronizing the delay 6 according to the invention and feedback loop 7.

The optical pulse oscillator 1 is the source of the broadband laser beam, whose spectral components produce both the signal laser beam 8 (typically chirped femtosecond pulses) and the source laser beam 9, which passes through the basic optical synchronization unit 4 and enters the regenerative amplifier 2, where it is amplified and becomes the pump laser beam 10.

The basic optical synchronization unit 4, in the field usually referred to as a delay line, is made of a system of mirrors controlled by drives with pico-metric shift (motorized actuators). Adjusting the mirror system in the delay line 4 determines a defined basic setting of the relative delay of the signal laser pulses 8 with the pump laser pulses 10. The mirror drivers in the synchronization unit 4 are further controlled by means of a feedback loop 7, sent from the jitter stabilization system 6 according to the invention. This feedback ensures that both laser beams 8 and 10 enter the OPCPA optical amplifier 3 synchronized in space and time after reflecting off the semi-transparent mirrors 5. In the OPCPA amplifier, the signal beam 8 is amplified at the expense of pump beam 10, energy and the output laser signal 11 is generated.

Semi-transparent mirrors 5 are partially transmissive in a predetermined manner; they transmit part of the primary laser beams 8 and 10, thus the partial signal laser beam 8a and partial pump laser beam 10a enter to the stabilization system 6 according to the invention. This unit, based on the interaction of partial beams 8a and 10a, then creates the signal for the above-mentioned feedback loop 7, which controls both the basic synchronization unit 4 and the piezo-mounted mirror in the regenerative amplifier resonator 2.

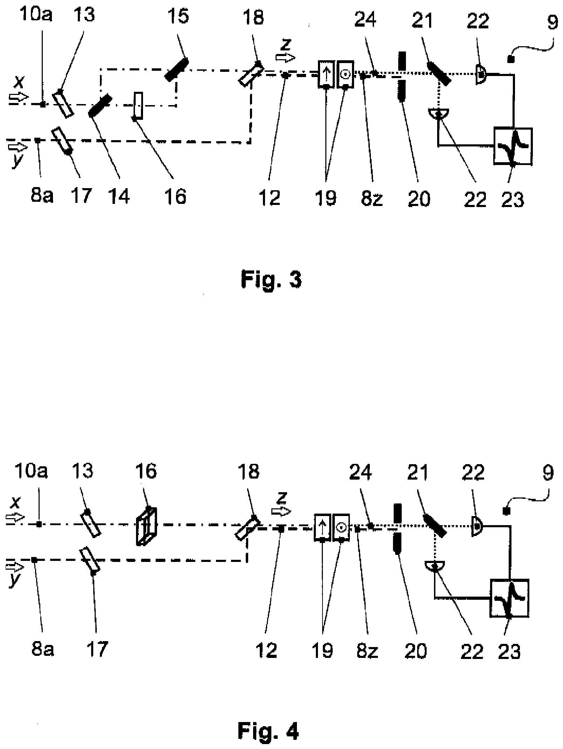

**Fig. 3** presents the inner layout of the preferred arrangement of the jitter stabilization system 6 according to the invention for time synchronization of laser pulses. The device contains a section of the partial signal laser beam 8a, section of the partial pump laser beam 10a and a section of the combined beam 12.
- The section of the partial pump laser beam 10a contains a polarization rotating element 13 in the direction X of the path along which the partial laser beam 10a propagates. The element is e.g. a half-wave plate, which adjusts the polarization plane of the partial pump laser beam 10a so that the intensity of both polarization components is comparable (optimally 50:50). There is then a splitting element 14, separating the pulse polarization components and directing them to separate optical paths, and the coupling element 15 directing the pulse polarization components back to a common optical path. Both these elements are e.g. polarizing beam splitters. The section of the partial pump laser beam 10a is divided into two partial optical paths between the splitting element 14 and the coupling element 15. One of them is equipped with a signal-delaying element 16, e.g. a delay plate, which ensures a fixed and defined delay τ of both polarization components of the partial laser pump beam 10a.
   In the preferred arrangement, the organization of elements 14, 15 and 16 corresponds to a Mach-Zehnder interferometer.
- In the preferred arrangement, the section of the partial signal laser beam 8a contains a polarization-plane rotating element 17 in the direction Y of the path along which the partial signal beam 8a propagates. The element is e.g. a half-wave plate and its function is the same as in the section of the partial pump beam 10a.
- The section of the partial signal laser beam 8a, the section of the partial pump laser beam 10a and the section of the combined laser beam 12 are connected in the combining element 18, which, for example in the presented case, is a dichroic mirror.
- The section of the combined beam 12 contains two anisotropic nonlinear media exhibiting the OPA in the direction Z of the path along which the combined laser beam 12 propagates. These are, in our case, orthogonally oriented nonlinear crystals 19, arranged consecutively in the path of the 8a and 10a partial laser beams. Time synchronization, which has not yet been adjusted by means of the feedback loop 7, here depends mostly on the quality of the synchronization implemented by the basic synchronization unit 4. A modified combined beam, which consists of the amplified partial signal beam (8z) and idler beam (24), resulting from the OPA interaction, emerges from the system of anisotropic nonlinear media exhibiting the OPA in the Z direction. Then there is a bandpass optical filter 20 and a measuring device. In the presented example, the measuring device consists of a splitting element 21 for separating the pulse polarization components of the measured beam and two photodetectors 22 connected to the data evaluation device 23.
- The measured and evaluated results provide the signal to the feedback loop 7.

**Fig. 4** is a modification of the arrangement shown in **Fig. 3****.** The section of partial signal beam 8a, section of combined beam 12 and mutual interconnection of all three sections is equivalent to **Fig. 3****.** The arrangement differs only in the section of partial pump beam 10a:
- The section of the partial pump beam 10a contains a birefringent plate, which causes a mutual shift of the vertical and horizontal pulse polarization component of the partial pump beam by a fixed and defined time delay τ. The desired delay is approximately equal to the length of the longer of the interacting pulses.

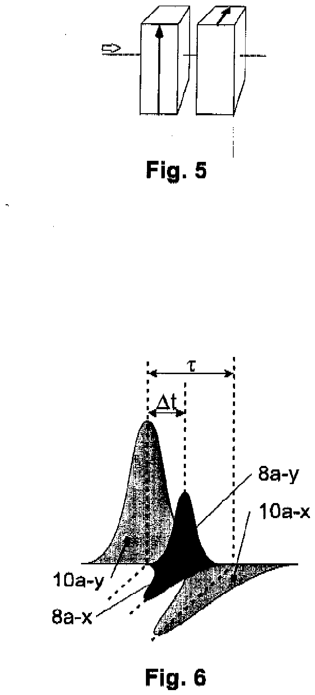

**Fig. 5** shows the orientation of two orthogonally oriented nonlinear anisotropic media exhibiting the OPA . Arrows indicate the orientation of the polarization of the signal beam which is amplified in the respective crystal. There can be a different number of nonlinear anisotropic media exhibiting the OPA and they can be of various materials, as described in the summary of the invention.

Anisotropic nonlinear environments exhibiting the OPA is due to the orthogonal second-order nonlinearity of a nonlinear medium, where three optical beams interact: the pump beam, the signal beam and the idler beam. In this process, the signal beam is amplified and the idler beam is generated at the expense of pump beam energy. From the individual photon's point of view, this is a decay of the pump photon into two photons, i.e. the signal photon and idler photon. Creating a pair of signal and idler photons consumes all of the energy from the pump photon; the nonlinear medium is thus not additionally heated.

The polarization of the beams in the nonlinear anisotropic medium depends on the type of interaction OPA. In the preferred arrangement a type I interaction can be used, where the polarization of the amplified signal beam and of the generated idler beam is identical in the given medium. In another preferred arrangement a type II interaction can be used, where the signal and idler beam are mutually orthogonally polarized in the given medium.

**Fig. 6** shows the mutual orientation and position of individual pulse polarization components of both parts of the combined beam 12 and their possible overlap in the preferred arrangement. The relative delay of the individual pulse components is given by the basic delay Δt of the pulses entering the jitter stabilization system 6, and by the fixed and defined time delay τ between the polarization components of the partial pump beam 10a (in this preferred arrangement), which occurs inside the jitter stabilization system 6. The figure thus depicts not only the fixed time delay τ between the horizontal polarization component 10a-x of the pulse of the partial pump laser beam 10a and the vertical polarization component 10a-y of the pulse of the partial pump laser beam 10a, but also the mutual shift Δt of both polarization components of the partial signal laser beam 8a, i.e. both the vertical polarization component 8a-y of the pulses of the partial signal laser beam 8a and the horizontal polarization component 8a-x of the pulse of the partial signal laser beam 8a, relative to the non-delayed polarization component of the partial pump pulse, which is subject to measurement and subsequent stabilization of the synchronization.

The relative time delay of the polarization components can also be applied to the polarization components of the partial signal beam 8a. The results of the measurement should be similar; however, the partial signal beam 8a is usually broad-spectral and it is necessary to appropriately adjust the delaying element so that the pulses of the partial signal beam 8a are not extended in time.

### Description of the Preferred Embodiments

In the preferred embodiments, semi-transparent mirrors 7, serving for uncoupling the partial laser beams for the synchronizing device 9 are made of material with low second order dispersion, so called Low-GGD, to prevent significant temporal broadening of the laser pulses.

The experimental arrangement according to the diagrams in **Fig. 3** or **Fig. 4** with following combinations of elements:
- The element that rotates the polarization plane (13, 17) adjusts the orientation of polarization by 45° to the subsequent optical elements, so that both beams contain vertical and horizontal polarization components in the optimal ratio 50:50. Elements which can be used for this are a half-wave plate, a Faraday rotator or a system of mirrors.
- The element that splits the polarization components (14, 15, 21) serves to direct the horizontal and vertical polarization components of the respective laser beam to separate optical paths. Elements which can be used for this are: polarizing beam splitter, polarizing cube, thin-layer polarizing film, Nicol prism, Glan-Thompson prism and/or a Glan-Taylor prism.
- The delaying element 16 causes a relative delay of the horizontal and vertical polarization components of one of the partial beams; in the preferred arrangement of the partial pump beam. The desired delay τ is approximately equal to the length of the longer of the two interacting pulses. The appropriate implementation of the delaying element is a delay plate, optical path delay - a system of mirrors, or a plate made of birefringent material, e.g. a 1.9 mm plate of birefringent calcite.
- The coupling element 18 is used to direct the two beams of the same or different wavelength to a common optical path. The elements used in the realised experiment are a dichroic mirror or a diffraction grating.
- The anisotropic nonlinear medium exhibiting the OPA 19 are usually nonlinear crystals. The selection of the appropriate material depends mainly on the wavelengths of the laser beams used. In the experiments, the following optical crystals are used: BBO (β-Baryum Borate), or LBO (Lithium Triborate), or KDP (Potassium Dihydrogen Phosphate), or DKDP (Potassium Dideuterium Phosphate), or BiBO (Bismuth Borate), or YCOB (Yttrium Calcium Oxoborate), or LiNBO3 (Lithium niobate), or KTP (Potassium Titanyl Phosphate).
- The selection of parameters of the bandpass optical filter 20 depends on the selected photodetector designed for the detection of the intensity of the polarization components of the measured beam.
- The photodetector 22 can be a software- or hardware-balanced photodetector with time-resolution. The selection of an appropriate photodetector depends on the measured wavelength. The elements used were photodiode, photomultiplier or phototransistor.

### Industrial Applicability

The method and device for the time synchronization of picosecond and sub-picosecond laser pulses play a key role in the development and operation of high-performance laser systems based on amplification using nonlinear phenomena which require accurate synchronization of the pump and signal laser beam in space and time.

## Claims

1. A method for time synchronization of picosecond and sub-picosecond laser pulses by means of a feedback loop based on measurement of the relative delay of the pulses of a signal and pump beam, using their interaction in a nonlinear medium, wherein
a partial signal beam (8a) and a partial pump beam (10a) are uncoupled from a primary signal beam (8) and a primary pump beam (10) immediately before interacting, which is affected by the synchronization;
the polarization of the partial signal beam (8a) and the polarization of the partial pump beam (10a) are adjusted so that the intensity of the vertical and horizontal polarization components of both the partial beams are comparable;
the horizontal and vertical pulse polarization components of exactly one of the partial beams (8a or 10a) are mutually time-delayed;
subsequently, a combined beam (12), formed by the mutually delayed pulse polarization components of exactly one of the partial beams (8a or 10a) and both pulse polarization components of the other partial beam (10a or 8a), is directed to at least two mutually orthogonally oriented anisotropic nonlinear media exhibiting the Optical Parametric Amplification (19) that are consecutively arranged in the combined beam path without an optical element between them, whereas amplification of the horizontal (8a-x) and vertical (8a-y) pulse polarization components of the partial signal beam (8a) occurs separately in each of the respective appropriately oriented anisotropic nonlinear media exhibiting the Optical Parametric Amplification;
and there the intensity of the respective pulse polarization component of the partial signal beam (8a) is amplified at the expense of energy from the corresponding pulse polarization component of the partial pump beam (10) and an idler beam (24) is generated, whereas the idler beam together with the amplified signal beam (8z) form the modified combined beam;
subsequently, the measuring and evaluating element measures and compares the intensities of both pulse polarization components of the amplified partial signal beam (8z) and/or the idler beam (24) and based on the acquired data, the feedback loop (7) is implemented.

2. The method according to claim 1 **characterized by that** semi-transparent mirrors made of material with a low value of group dispersion for the selected wavelengths of pulses of the laser beams are used for uncoupling the partial signal laser beam (8a) and the partial pump laser beam (10a).

3. The method according to claim 1 or claim 2 **characterized by that** a ratio of the pulse polarization components of the partial signal beam (8a) and the partial pump beam (10a) is adjusted by passing through an element rotating the polarization plane, whereas the element is appropriately adjusted with regard to the desired orientation of the polarization plane to the subsequent optical elements.

4. The method according to any one of claims 1 to 3 **characterized by that** the relative delay between the pulse polarization components of exactly one of the partial beams (8a or 10a) is achieved by directing individual polarization components to different optical paths, whereas the paths differ in their length and/or at least one of the separated pulse polarization components of the partial beam passes through a signal-delaying element (16), subsequently, both the mutually delayed pulse polarization components of exactly one of the partial beams (8a or 10a) are overlapped by being directed to the same optical path through a coupling element (15); then, both polarization components of the other partial beam (10a or 8a) are directed to the same optical path through the same and/or another coupling element (15 or 18), thereby forming the combined beam (12).

5. The method according to any one of claims 1 to 3 **characterized by that** the relative delay between the pulse polarization components of exactly one of the partial beams (8a or 10a) is achieved by passing through an optically birefringent material (16) and then the other partial beam (8a or 10a) passes through the coupling element (18) to the common optical path, thereby forming the combined beam (12).

6. The method according to any one of claims 1 to 5 **characterized by that** the pulse of the amplified partial signal beam (8z) and/or the pulse of the idler beam (24) which are formed in the interaction in the anisotropic nonlinear medium exhibiting the Optical Parametric Amplification (19), are passed through a bandpass optical filter before measurement.

7. The method according to any one of claims 1 to 6 **characterized by that** before the measurement, the pulse of the amplified partial signal beam (8z) or the pulse of the idler beam (24) is split in the element splitting the polarization components (21) and these components are directed to different optical paths.

8. A device configured to implement the method for the optical stabilization of the time synchronization of picosecond and sub-picosecond laser pulses according to claim 1 containing
at least one signal delaying element (16) designed to delay at least one pulse polarization component of at least one of the partial laser beams (8a or 10a),
at least one coupling element (18) designed to form at least one combined beam (12),
at least two anisotropic nonlinear media exhibiting the Optical Parametric Amplification designed to provide the interaction of the mutually appropriate pulse polarization components of the partial laser beams (8a, 10a), wherein the at least two anisotropic nonlinear media exhibiting the Optical Parametric Amplification (19) are arranged consecutively in the direction of the combined beam (12) propagation without an optical element between them and at the same time orthogonally oriented to each other, so that the horizontal or vertical pulse polarization component of the partial signal beam (8a) is always amplified in a different appropriately oriented anisotropic medium exhibiting the Optical Parametric Amplification 19),at least one measuring element with at least one photodetector with time resolution, and the evaluation element.

9. The device according to claim 8 **characterized by that** it further contains at least one polarization rotating element (13 and/or 17) designed to rotate the polarization plane of the partial pump beam (10a) and/or of the partial signal beam (8a), wherein the polarization rotating element (13 and/or 17) is a half-wave plate and/or a system of mirrors and/or a Faraday rotator.

10. The device according to claim 8 **characterized by that** the delaying element (16) is a delay plate and/or a system of mirrors and/or an optically birefringent material.

11. The device according to claim 8 **characterized by that** it also contains at least one polarization component splitting element (14) for splitting the pulse polarization components of the partial pump beam (10a) and/or the partial signal beam (8a), wherein the polarization component splitting element (14) is a polarizing beam splitter and/or a polarizing cube and/or a thin-layer polarizing film and/or a Nicol prism and/or a Glan-Thompson prism and/or a Glan-Taylor prism.

12. The device according to claim 11 **characterized by that** it also contains the optical coupling element (15), wherein the polarization component splitting element (14), the delaying element (16) and the coupling element (15) are arranged as a Mach-Zehnder interferometer.

13. The device according to claim 8 **characterized by that** it also contains at least one optical coupling element (18) designed for directing at least some of the pulse polarization components of the partial pump beam (10a) and at the same time at least some of the pulse polarization components of the partial signal beam (8a) to the common optical path and thereby forming at least one combined beam (12), wherein the optical coupling element (18) is a dichroic mirror and/or diffraction grating and/or a dichroic beam-splitter.

14. The device according to claim 13 **characterized by that** the anisotropic medium exhibiting the Optical Parametric Amplification (19) designed for the interaction of respective pulse polarization components of the partial beams (8a or 10a) is a nonlinear crystal made of β-Baryum Borate, or Lithium Triborate, or Potassium Dihydrogen Phosphate, or Potassium Dideuterium Phosphate, or Bismuth Borate, or Yttrium Calcium Oxoborate, or Lithium niobate, or Potassium Titanyl Phosphate.

15. The device according to claim 8 **characterized by that** there is at least one bandpass optical filter (20) between the anisotropic medium exhibiting the Optical Parametric Amplification (19) and the measuring element, for transmitting the measured amplified partial signal beam (8z) and/or the idler beam (24).

## Patentansprüche

1. Verfahren zur Zeitsynchronisierung von Pikosekunden- und Subpikosekunden-Laserpulsen mittels eines Rückkopplungskreises basierend auf einer Messung der relativen Verzögerung der Pulse eines Signal- und Pumpstrahls mithilfe ihrer Interaktion in einem nicht-linearen Medium, wobei
ein Teilsignalstrahl (8a) und ein Teilpumpstrahl (10a) von einem primären Signalstrahl (8) und einem primären Pumpstrahl (10) unmittelbar vor dem Interagieren, das durch die Synchronisierung beeinflusst wird, entkoppelt werden;
die Polarisierung des Teilsignalstrahls (8a) und die Polarisierung des Teilpumpstrahls (10a) so eingestellt sind, dass die Intensität der vertikalen und horizontalen Polarisierungskomponenten beider Teilstrahle vergleichbar sind;
die horizontalen und vertikalen Pulspolarisierungskomponenten genau eines der Teilstrahlen (8a oder 10a) untereinander zeitverzögert sind;
anschließend ein kombinierter Strahl (12), der durch die untereinander verzögerten Pulspolarisierungskomponenten genau eines der Teilstrahlen (8a oder 10a) und beider Pulspolarisierungskomponenten des anderen Teilstrahls (10a oder 8a) gebildet wird, auf mindestens zwei untereinander orthogonal ausgerichtete anisotropische nichtlineare Medien gelenkt wird, die die optische parametrische Verstärkung (19) aufweisen, die im kombinierten Strahlpfad aufeinanderfolgend ohne ein optisches Element zwischen ihnen angeordnet sind, während die Verstärkung der horizontalen (8a-x) und der vertikalen (8a-y) Pulspolarisierungskomponenten des Teilsignalstrahls (8a) getrennt in jedem der jeweiligen geeignet ausgerichteten anisotropischen nichtlinearen Medien auftritt, die die optische parametrische Verstärkung aufweisen;
und dort die Intensität der jeweiligen Pulspolarisierungskomponente des Teilsignalstrahls (8a) auf Kosten der Energie von der entsprechenden Pulspolarisierungskomponente des Teilpumpstrahls (10) verstärkt und ein Idler-Strahl (24) erzeugt wird, während der Idler-Strahl gemeinsam mit dem verstärkten Signalstrahl (8z) den modifizierten kombinierten Strahl bilden;
das Mess- und Evaluierungselement anschließend die Intensitäten beider Pulspolarisierungskomponenten des verstärkten Teilsignalstrahls (8z) und/oder des Idler-Strahls (24) misst und vergleicht und auf der Grundlage der erworbenen Daten der Rückkopplungskreis (7) implementiert wird.

2. Verfahren nach Anspruch 1, **dadurch gekennzeichnet, dass** halbtransparente Spiegel, die aus einem Material mit einem niedrigen Gruppendispersionswert für die ausgewählten Wellenlängen von Laserstrahlpulsen hergestellt sind, für das Entkoppeln des Teilsignallaserstrahls (8a) und des Teilpumplaserstrahls (10a) verwendet werden.

3. Verfahren nach Anspruch 1 oder 2, **dadurch gekennzeichnet, dass** ein Verhältnis der Pulspolarisierungskomponenten des Teilsignalstrahls (8a) und des Teilpumpstrahls (10a) eingestellt wird, indem ein die Polarisierungsebene rotierendes Element durchgeleitet wird, während das Element bezüglich der gewünschten Ausrichtung der Polarisierungsebene auf die nachfolgenden optischen Elemente geeignet eingestellt ist.

4. Verfahren nach einem der Ansprüche 1 bis 3, **dadurch gekennzeichnet, dass** die relative Verzögerung zwischen den Pulspolarisierungskomponenten von genau einem der Teilstrahle (8a oder 10a) durch Lenken einzelner Polarisierungskomponenten auf unterschiedliche optische Pfade erzielt wird, während sich die Pfade in ihrer Länge unterscheiden und/oder mindestens eine der getrennten Pulspolarisierungskomponenten des Teilstrahls durch ein signalverzögemdes Element (16) geleitet wird, nachfolgend beide untereinander verzögerten Pulspolarisierungskomponenten genau eines der Teilstrahle (8a oder 10a) überlappt werden, indem sie durch ein Kopplungselement (15) auf denselben optischen Pfad gelenkt werden; dann beide Polarisierungskomponenten des anderen Teilstrahls (10a oder 8a) auf denselben optischen Pfad durch dasselbe und/oder ein anderes Kopplungselement (15 oder 18) gelenkt werden, wodurch der kombinierte Strahl (12) gebildet wird.

5. Verfahren nach einem der Ansprüche 1 bis 3, **dadurch gekennzeichnet, dass** die relative Verzögerung zwischen den Pulspolarisierungskomponenten von genau einem der Teilstrahle (8a oder 10a) durch Durchleiten durch ein optisch doppeltbrechendes Material (16) erzielt wird und dann der andere Teilstrahl (8a oder 10a) durch das Kopplungselement (18) zum gemeinsamen optischen Pfad geleitet wird, wodurch der kombinierte Strahl (12) gebildet wird.

6. Verfahren nach einem der Ansprüche 1 bis 5, **dadurch gekennzeichnet, dass** der Puls des verstärkten Teilsignalstrahls (8z) und/oder der Puls des Idler-Strahls (24), die durch die Interaktion im anisotropischen nichtlinearen Medium, das die optische parametrische Verstärkung (19) aufweist, gebildet werden, vor dem Messen durch ein optisches Bandfilter geleitet werden.

7. Verfahren nach einem der Ansprüche 1 bis 6, **dadurch gekennzeichnet, dass** der Puls des verstärkten Teilsignalstrahls (8z) oder der Puls des Idler-Strahls (24) vor der Messung in das die Polarisierungskomponenten (21) aufspaltende Element aufgespalten wird und diese Komponenten zu unterschiedlichen optischen Pfaden gelenkt werden.

8. Vorrichtung, die konfiguriert ist, um das Verfahren für die optische Stabilisierung der Zeitsynchronisierung von Pikosekunden- und Subpikosekundenlaserpulsen nach Anspruch 1 zu implementieren, enthaltend
mindestens ein Signalverzögerungselement (16), das konzipiert ist, um mindestens eine Pulspolarisierungskomponente von mindestens einem der Teillaserstrahlen (8a oder 10a) zu verzögern,
mindestens ein Kopplungselement (18), das konzipiert ist, um mindestens einen kombinierten Strahl (12) zu bilden,
mindestens zwei anisotropische nichtlineare Medien, die die optische parametrische Verstärkung aufweisen, die konzipiert sind, um die Interaktion der untereinander geeigneten Pulspolarisierungskomponenten der Teillaserstrahlen (8a, 10a) bereitzustellen, wobei die mindestens zwei anisotropischen nichtlinearen Medien, die die optische parametrische Verstärkung (19) aufweisen, in der Verbreitungsrichtung des kombinierten Strahls (12) aufeinanderfolgend ohne optisches Element zwischen ihnen angeordnet und gleichzeitig orthogonal zueinander ausgerichtet sind, so dass die horizontale oder vertikale Pulspolarisierungskomponente des Teilsignalstrahls (8a) immer in einem unterschiedlichen, geeignet ausgerichteten anisotropischen Medium, das die optische parametrische Verstärkung (19), mindestens ein Messelement mit mindestens einem Photodetektor mit Zeitauflösung und das Evaluierungselement aufweist, verstärkt wird.

9. Vorrichtung nach Anspruch 8, **dadurch gekennzeichnet, dass** sie ferner mindestens ein Polarisierungsrotationselement (13 und/oder 17) enthält, das konzipiert ist, um die Polarisierungsebene des Teilpumpstrahls (10a) und/oder des Teilsignalstrahls (8a) zu rotieren, wobei das Polarisierungsrotationselement (13 und/oder 17) eine Halbwellenplatte und/oder ein System aus Spiegeln und/oder ein Faraday-Rotator ist.

10. Vorrichtung nach Anspruch 8, **dadurch gekennzeichnet, dass** das Verzögerungselement (16) eine Verzögerungsplatte und/oder ein System aus Spiegeln und/oder ein optisch doppeltbrechendes Material ist.

11. Vorrichtung nach Anspruch 8, **dadurch gekennzeichnet, dass** sie auch ein Polarisierungskomponentenspaltelement (14) zum Aufspalten der Pulspolarisierungskomponenten des Teilpumpstrahls (10a) und/oder des Teilsignalstrahls (8a) enthält, wobei das Polarisierungskomponentenspaltelement (14) ein Polarisierungsstrahlspalter und/oder ein Polarisierungswürfel und/oder ein Dünnschichtpolarisierungsfilm und/oder ein Nicolsches Prisma und/oder ein Glan-Thompson-Prisma und/oder ein Glan-Taylor-Prisma ist.

12. Vorrichtung nach Anspruch 11, **dadurch gekennzeichnet, dass** sie auch das optische Kopplungselement (15) enthält, wobei das Polarisierungskomponentenspaltelement (14), das Verzögerungselement (16) und das Kopplungselement (15) als Mach-Zehnder-Interferometer angeordnet sind.

13. Vorrichtung nach Anspruch 8, **dadurch gekennzeichnet, dass** sie auch mindestens ein optisches Kopplungselement (18) umfasst, das konzipiert ist, um mindestens einen Teil der Pulspolarisierungskomponenten des Teilpumpstrahls (10a) und gleichzeitig mindestens einen Teil der Pulspolarisierungskomponenten des Teilsignalstrahls (8a) auf den gemeinsamen optischen Pfad zu lenken und dadurch mindestens einen kombinierten Strahl (12) zu bilden, wobei das optische Kopplungselement (18) ein dichroitischer Spiegel und/oder ein Beugungsgitter und/oder ein dichroitischer Strahlspalter ist.

14. Vorrichtung nach Anspruch 13, **dadurch gekennzeichnet, dass** das anisotropische Medium, das die optische parametrische Verstärkung (19) aufweist, das für die Interaktion jeweiliger Pulspolarisierungskomponenten der Teilstrahle (8a oder 10a) konzipiert ist, ein nichtlineares Kristall ist, das aus β-Bariumborat oder Lithiumtriborat oder Kaliumdihydrogenphosphat oder Kaliumdideuteriumphosphat oder Bismuthborat oder Yttriumcalziumoxoborat oder Lithiumniobat oder Kaliumtitanylphosphat hergestellt ist.

15. Vorrichtung nach Anspruch 8, **dadurch gekennzeichnet, dass** sich zwischen dem anisotropischen Medium, das die optische parametrische Verstärkung (19) aufweist, und dem Messelement mindestens ein optisches Bandpassfilter (20) befindet, um den gemessenen verstärkten Teilsignalstrahl (8z) und/oder den Idler-Strahl (24) zu senden.

## Revendications

1. Procédé permettant la synchronisation temporelle d'impulsions laser en picosecondes et en sous-picosecondes au moyen d'une boucle de rétroaction sur la base de la mesure du retard relatif des impulsions d'un faisceau de signal et d'un faisceau de pompage, utilisant leur interaction dans un milieu non linéaire,
un faisceau de signal partiel (8a) et un faisceau de pompage partiel (10a) étant découplés d'un faisceau de signal primaire (8) et d'un faisceau de pompage primaire (10) immédiatement avant une interaction qui est affectée par la synchronisation ;
ladite polarisation du faisceau de signal partiel (8a) et ladite polarisation du faisceau de pompage partiel (10a) étant réglées afin que les intensités des composantes de polarisation verticale et horizontale des deux faisceaux partiels soient comparables ;
lesdites composantes de polarisation d'impulsion horizontale et verticale d'exactement l'un des faisceaux partiels (8a ou 10a) étant mutuellement retardées ;
ensuite, un faisceau combiné (12), formé par les composantes de polarisation d'impulsions mutuellement retardées d'exactement l'un des faisceaux partiels (8a ou 10a) et des deux composantes de polarisation d'impulsions de l'autre faisceau partiel (10a ou 8a), étant dirigé vers au moins deux milieux non linéaires anisotropes orientés de manière à être mutuellement perpendiculaire présentant l'amplification optique paramétrique (19) qui sont agencés consécutivement dans le chemin de faisceau combiné sans élément optique entre eux, alors que l'amplification des composantes de polarisation d'impulsions horizontale (8a-x) et verticale (8a-y) du faisceau de signal partiel (8a) se produit séparément dans chacun des milieux non linéaires anisotropes respectifs orientés de manière appropriée, présentant l'amplification optique paramétrique ;
et à ce stade, ladite intensité de la composante de polarisation d'impulsion respective du faisceau de signal partiel (8a) étant amplifiée aux dépens de l'énergie provenant de la composante de polarisation d'impulsion correspondante du faisceau de pompage partiel (10) et un faisceau complémentaire (24) étant généré, alors que le faisceau complémentaire ensemble avec le faisceau de signal amplifié (8z) forment le faisceau combiné modifié ;
ensuite, ledit élément de mesure et d'évaluation mesurant et comparant les intensités des deux composantes de polarisation d'impulsions du faisceau de signal partiel amplifié (8z) et/ou du faisceau complémentaire (24) et, sur la base des données acquises, ladite boucle de rétroaction (7) étant mise en oeuvre.

2. Procédé selon la revendication 1, **caractérisé en ce que** des miroirs semi-transparents constitués d'un matériau avec une faible valeur de dispersion de groupe pour les longueurs d'onde sélectionnées des impulsions des faisceaux laser sont utilisés pour découpler le faisceau laser de signal partiel (8a) et le faisceau laser de pompage partiel (10a).

3. Procédé selon la revendication 1 ou 2, **caractérisé en ce qu'**un rapport des composantes de polarisation d'impulsions du faisceau de signal partiel (8a) et du faisceau de pompage partiel (10a) est réglé en passant à travers un élément faisant tourner le plan de polarisation, alors que l'élément est réglé de manière appropriée en ce qui concerne l'orientation souhaitée du plan de polarisation par rapport aux éléments optiques suivants.

4. Procédé selon l'une quelconque des revendications 1 à 3, **caractérisé en ce que** le retard relatif entre les composantes de polarisation d'impulsion d'exactement l'un des faisceaux partiels (8a ou 10a) est obtenu en dirigeant les composantes de polarisation individuelles vers des chemins optiques différents, alors que les chemins diffèrent dans leur longueur et/ou au moins l'une des composantes de polarisation d'impulsion séparées du faisceau partiel traverse un élément retardateur de signal (16), ensuite les deux composantes de polarisation d'impulsion mutuellement retardées d'exactement l'un des faisceaux partiels (8a ou 10a) sont superposées en étant dirigées vers le même chemin optique à travers un élément de couplage (15) ; ensuite, les deux composantes de polarisation de l'autre faisceau partiel (10a ou 8a) étant dirigées vers le même chemin optique à travers le même et/ou un autre élément de couplage (15 ou 18), formant ainsi le faisceau combiné (12).

5. Procédé selon l'une quelconque des revendications 1 à 3, **caractérisé en ce que** le retard relatif entre les composantes de polarisation d'impulsion d'exactement l'un des faisceaux partiels (8a ou 10a) est obtenu en passant à travers un matériau optiquement biréfringent (16) et ensuite l'autre faisceau partiel (8a ou 10a) passant à travers l'élément de couplage (18) jusqu'au chemin optique commun, formant ainsi le faisceau combiné (12).

6. Procédé selon l'une quelconque des revendications 1 à 5, **caractérisé en ce que** l'impulsion du faisceau de signal partiel amplifié (8z) et/ou l'impulsion du faisceau complémentaire (24) qui sont formés lors de l'interaction dans le milieu non linéaire anisotrope présentant l'amplification optique paramétrique (19) passent à travers un filtre optique passe-bande avant la mesure.

7. Procédé selon l'une quelconque des revendications 1 à 6, **caractérisé en ce qu'**avant la mesure, l'impulsion du faisceau de signal partiel amplifié (8z) ou l'impulsion du faisceau complémentaire (24) est divisée dans l'élément divisant les composantes de polarisation (21) et ces composantes sont dirigées vers différents chemins optiques.

8. Dispositif configuré pour mettre en oeuvre le procédé pour la stabilisation optique de la synchronisation temporelle d'impulsions laser en picosecondes et en sous-picosecondes selon la revendication 1, contenant
au moins un élément retardateur de signal (16) conçu pour retarder au moins une composante de polarisation d'impulsion d'au moins l'un des faisceaux laser partiels (8a ou 10a),
au moins un élément de couplage (18) conçu pour former au moins un faisceau combiné (12),
au moins deux milieux non linéaires anisotropes présentant l'amplification optique paramétrique conçus pour assurer l'interaction des composantes de polarisation d'impulsions mutuellement appropriées des faisceaux laser partiels (8a, 10a), lesdits au moins deux milieux non linéaires anisotropes présentant l'amplification optique paramétrique (19) étant agencés consécutivement selon la direction de propagation du faisceau combiné (12) sans un élément optique entre eux et en même temps étant orientés perpendiculairement l'un par rapport à l'autre afin que la composante de polarisation d'impulsion horizontale ou verticale du faisceau de signal partiel (8a) soit toujours amplifié dans un milieu anisotrope orienté de manière approprié différent présentant l'amplification optique paramétrique (19), au moins un élément de mesure avec au moins un photodétecteur à résolution temporelle, et l'élément d'évaluation.

9. Dispositif selon la revendication 8, **caractérisé en ce qu'**il contient en outre au moins un élément rotatif de polarisation (13 et/ou 17) conçu pour faire tourner le plan de polarisation du faisceau de pompage partiel (10a) et/ou du faisceau de signal partiel (8a), ledit élément rotatif de polarisation (13 et/ou 17) étant une plaque demi-onde et/ou un système de miroirs et/ou un rotateur de Faraday.

10. Dispositif selon la revendication 8, **caractérisé en ce que** l'élément retardateur (16) est une plaque à retard et/ou un système de miroirs et/ou un matériau optiquement biréfringent.

11. Dispositif selon la revendication 8, **caractérisé en ce qu'**il contient également au moins un élément de division (14) de composantes de polarisation destiné à diviser les composantes de polarisation d'impulsions du faisceau de pompage partiel (10a) et/ou du faisceau de signal partiel (8a), ledit élément de division (14) de composantes de polarisation étant un dispositif diviseur de faisceau polarisant et/ou un cube polarisant et/ou un film polarisant en couche mince et/ou un prisme de Nicol et/ou un prisme de Glan-Thompson et/ou un prisme de Glan-Taylor.

12. Dispositif selon la revendication 11, **caractérisé en ce qu'**il contient également l'élément de couplage optique (15), ledit élément de division (14) de composantes de polarisation, ledit élément retardateur (16) et ledit élément de couplage (15) étant agencés sous la forme d'un interféromètre de Mach-Zehnder.

13. Dispositif selon la revendication 8, **caractérisé en ce qu'**il contient également au moins un élément de couplage optique (18) conçu pour diriger au moins certaines des composantes de polarisation d'impulsions du faisceau de pompage partiel (10a) et en même temps au moins certaines composantes de polarisation d'impulsions du faisceau de signal partiel (8a) vers le chemin optique commun et pour former ainsi au moins un faisceau combiné (12), ledit élément de couplage optique (18) étant un miroir dichroïque et/ou un réseau de diffraction et/ou un diviseur de faisceau dichroïque.

14. Dispositif selon la revendication 13, **caractérisé en ce que** le milieu anisotrope présentant l'amplification optique paramétrique (19) conçu pour l'interaction des composantes de polarisation d'impulsions respectives des faisceaux partiels (8a ou 10a) est un cristal non linéaire constitué de borate de β-baryum, ou de Triborate de lithium, ou de dihydrogénophosphate de potassium, ou de phosphate de dideuterium de potassium, ou de borate de bismuth, ou d'oxoborate d'yttrium et de calcium, ou de niobate de lithium, ou de phosphate de titanyle de potassium.

15. Dispositif selon la revendication 8, **caractérisé en ce qu'**au moins un filtre optique passe-bande (20) est présent entre le milieu anisotrope présentant l'amplification optique paramétrique (19) et l'élément de mesure en vue de la transmission du faisceau de signal partiel amplifié mesuré (8z) et/ou du faisceau complémentaire (24).
